# FASCICULE DE BREVET EUROPEEN

(11) **EP 3 045 028 B1**
(45) Date de publication et mention de la délivrance du brevet: **05.12.2018**
(21) Numéro de dépôt: 16151061.5
(22) Date de dépôt: 13.01.2016
(51) Int. Cl.: A01B 71/06, A01B 59/06, A01K 5/00

(54) **TRÉMIE ET SON PORTE-OUTIL**
TRICHTER UND SEIN HALTER
HOPPER AND HOLDER THEREOF

(30) Priorité: 13.01.2015 FR 1550253
(43) Date de publication de la demande: 20.07.2016
(73) Titulaire: Etablissements Emily, 29800 Tréflévénez (FR)
(72) Inventeur: MIOSSEC, Arnaud, 29440 Plouzévédé (FR); GUENGANT, Michel, 29440 Plougar (FR); RUNGOAT, David, 29800 Tréflévénez (FR); NEDELEC, Pierre, 29460 Hanvec (FR)
(74) Mandataire: Cabinet Le Guen Maillet

(56) Documents cités:
- CA-A1- 2 282 895
- DE-A1- 4 307 845
- FR-A- 1 326 409
- FR-A1- 2 376 621
- NL-A- 7 311 024

## Description

La présente invention concerne une trémie attelée à un porte-outil destiné à être attelé à un engin porteur susceptible de la soulever, pour charger une matière et la distribuer, la trémie comprenant une benne, un organe de vidange de ladite benne, un moyen d'attelage avec ledit porte-outil, ledit porte-outil comprenant un moyen d'attelage correspondant avec la trémie.

Il est connu, dans la demande de brevet n° FR1356784, d'utiliser une dérouleuse ou une dérouleuse pailleuse à l'aide d'un porte-outil attelé à un engin porteur pour dérouler, par exemple sur le sol ou dans des mangeoires, une botte de fourrage à des animaux tels que des bovins. Le conducteur de l'engin attelle le porte-outil sur l'organe de levage de l'engin, puis il va prendre une botte de fourrage en la traversant à l'aide d'au moins un doigt dont est pourvu le porte-outil, puis il la soulève, la déplace et charge celle-ci dans la machine. Toujours dans la cabine, il attelle ensuite sur le porte-outil, la machine chargée, en manoeuvrant l'engin. Pendant cette opération, l'accrochage mécanique de la machine est réalisé, ainsi que son accouplement permettant au porte-outil de la faire fonctionner. Il la soulève et la déplace sur le lieu où il doit épandre la botte en la déroulant. Il actionne à cet effet depuis sa cabine une manette de commande d'un organe de déroulage de la machine.

Il est connu également dans le but d'équilibrer l'alimentation de ces animaux, d'ajouter un ou des compléments alimentaires et qu'il convient de déverser sur le fourrage.

Par ailleurs, on connaît à la lecture du brevet DE-A1-43 07 845, un dispositif de couplage permettant d'atteler une remorque sur un tracteur agricole équipé d'un attelage à trois points et d'une prise de force. Le dispositif de couplage comprend un premier châssis attelé sur le tracteur ainsi qu'un second châssis monté sur la remorque.

Le premier châssis présente une forme en triangle. Il est attelé mécaniquement sur l'attelage à trois points du tracteur. Le premier châssis est pourvu d'un engrenage inférieur relié par un cardan à la prise de force du tracteur.

Le second châssis présente également une forme en triangle. En soulevant le premier châssis sous le second châssis, on attelle la remorque. Le second châssis vient coiffer le premier châssis. Le second châssis est bloqué en position à l'aide d'un levier.

Le second châssis comprend :
* un crochet d'attelage pour un anneau solidaire du timon de la remorque afin de pouvoir la tracter,
* un engrenage supérieur qui vient engrener sur l'engrenage inférieur à l'issue de la mise en place du second châssis sur le premier châssis.

La remorque est équipée d'un tapis roulant d'entraînement de la matière et d'un rotor d'évacuation de la matière.

On connaît encore à la lecture du brevet NL-A-7 311 024, un dispositif d'attelage d'un tracteur à un distributeur d'engrais. Le tracteur dispose d'un relevage à trois points, d'une prise de force, de barres à trous, de deux bras d'arrêt portant deux galets et deux crochets articulés, d'une broche de centrage.

Le distributeur d'engrais est pourvu d'un cadre auquel est articulé, par l'intermédiaire d'un parallélogramme articulé, un bouclier. Celui-ci porte un crochet pouvant être retenu dans une plaque fixée entre les deux barres à trous, la partie complémentaire de la prise de force. On recule le tracteur et l'on abaisse son relevage trois points pour libérer les deux bras d'arrêt afin que les deux galets viennent en butée sur le bouclier de l'accessoire, puis l'on recule encore le tracteur, et l'on relève les deux crochets qui soulèvent alors le bouclier qui vient se verrouiller sur la broche de centrage et les deux éléments de la prise de force viennent s'accoupler. Deux éclisses présentes sur le distributeur d'engrais permettent de bloquer le parallélogramme articulé pendant le relevage du trois points pour qu'il puisse être soulevé.

Connaissant cet état de l'art, le demandeur a cherché une solution simple et rapide pour permettre au conducteur d'un engin porteur de transporter et de déverser des compléments alimentaires sur du fourrage ou inversement et de manière générale, de transporter et de déverser des matières fluides.

A cet effet, est proposée une trémie attelée à un porte-outil destiné à être attelé à un engin porteur pour charger une matière et la distribuer, la trémie comprenant une benne, un organe de vidange de ladite benne, un moyen d'attelage avec ledit porte-outil, ledit porte-outil comprenant un moyen d'attelage correspondant avec la trémie, ledit porte-outil comprenant au moins un doigt; selon l'invention, les moyens d'attelage comprennent un moyen conçu pour soulever du sol ladite trémie à l'aide de l'engin porteur et l'organe de vidange de ladite trémie est relié à un moyen d'entraînement à rotation destiné à être accouplé avec un organe correspondant présent sur le porte-outil, l'accouplement entre ces deux organes étant réalisé à l'issue de l'attelage mécanique de la trémie sur ledit porte-outil.

La trémie peut ainsi être facilement et rapidement attelée au porte-outil préalablement attelé à un engin de levage. Le porte-outil peut soulever et faire fonctionner la trémie.

Selon l'invention, le moyen conçu pour soulever du sol ladite trémie comprend ledit doigt dont est pourvu le porte-outil et qui peut s'engager dans une traverse correspondante disposée dans la partie basse de la trémie, considérée dans sa position de service.

Le ou les doigts peuvent ainsi soulever la trémie et la positionner en vis-à-vis du porte-outil, lorsqu'il est levé par l'engin.

Selon une caractéristique additionnelle de l'invention, le moyen d'entraînement à rotation comprend un engrenage ou un crabot, destiné à coopérer avec un engrenage ou un crabot correspondant porté par le porte-outil.

L'accouplement de ces deux organes correspondants (engrenage/engrenage, crabot/crabot) est réalisé pendant l'attelage de la trémie sur le porte-outil. Le conducteur de l'engin de levage n'a pas à descendre de sa cabine pour faire fonctionner la trémie.

En variante de réalisation, le moyen d'entraînement à rotation comprend un moteur hydraulique raccordé à des coupleurs montés sur une platine susceptible de coopérer avec une platine correspondante portée par le porte-outil.

L'accouplement des deux platines raccorde d'un point de vue hydraulique le porte-outil avec la trémie, le porte-outil pouvant alors faire fonctionner ladite trémie.

Selon une caractéristique additionnelle de l'invention, la trémie comprend une paroi latérale traversée par une ouverture et l'organe de vidange comprend un tube formant un axe de rotation pour ledit organe de vidange, au moins un filet hélicoïdal étant disposé autour dudit tube de sorte à évacuer la matière susceptible d'être contenue dans ladite trémie au travers de ladite ouverture.

L'organe de vidange est en mesure de transférer à l'extérieur de la trémie la matière qu'elle est susceptible de contenir.

Selon une caractéristique additionnelle de l'invention, un mécanisme de renvoi est interposé entre l'axe de rotation et ledit pignon ou ledit crabot, le mécanisme de renvoi comprenant une transmission par chaîne/pignons ou par courroie/poulies, un arbre de transmission vers un boîtier de renvoi d'angle à 90° et sur lequel est monté ledit pignon ou ledit crabot.

La trémie peut être attelée sur un autre côté tout en permettant au porte-outil de la faire fonctionner.

Selon une caractéristique additionnelle de l'invention, une goulotte de vidange est raccordée à l'extérieur d'une autre paroi latérale constitutive de ladite trémie.

La goulotte permet d'orienter le flux de matière évacuée par son organe de vidange.

Avantageusement, la goulotte est raccordée à ladite paroi latérale par l'intermédiaire d'un manchon rotatif pour dévoyer d'un bord ou de l'autre de la trémie la matière évacuée par son organe de vidange.

L'utilisation de la trémie est ainsi grandement facilitée.

Avantageusement, la goulotte est pourvue d'un moyen de manoeuvre destiné à l'orienter.

En manoeuvrant la poignée on peut ainsi orienter la goulotte vers le haut ou vers le bas.

Les caractéristiques de l'invention mentionnées ci-dessous, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'un porte-outil et d'une trémie destinée à être attelée au porte-outil selon l'invention,
la Fig. 2a représente une vue en perspective avant d'un porte-outil destiné à être solidarisé à un engin de levage selon l'invention,
la Fig. 2b représente une vue en perspective arrière d'un porte-outil destiné à être solidarisé à un engin de levage selon l'invention,
la Fig. 3 représente une vue latérale en perspective d'une trémie selon l'invention,
la Fig. 4 représente une vue de dessus en perspective d'une trémie selon l'invention,
la Fig. 5 représente une vue de dessus en perspective d'une variante de réalisation d'une trémie selon l'invention,
la Fig. 6a représente une vue latérale en perspective d'une trémie et dont la goulotte qu'elle comporte est orientée dans une position de transport selon l'invention,
la Fig. 6b représente une vue latérale en perspective d'une trémie et dont la goulotte qu'elle comporte est orientée dans une position de vidange selon l'invention,
la Fig. 6c représente une vue latérale sous un autre angle en perspective d'une trémie et dont la goulotte qu'elle comporte est orientée dans une position de transport selon l'invention,
la Fig. 7 représente une vue latérale en perspective d'une trémie et de son porte-outil selon l'invention et
la Fig. 8 représente une vue de dessus d'une variante de réalisation d'une trémie et de son porte-outil selon l'invention.

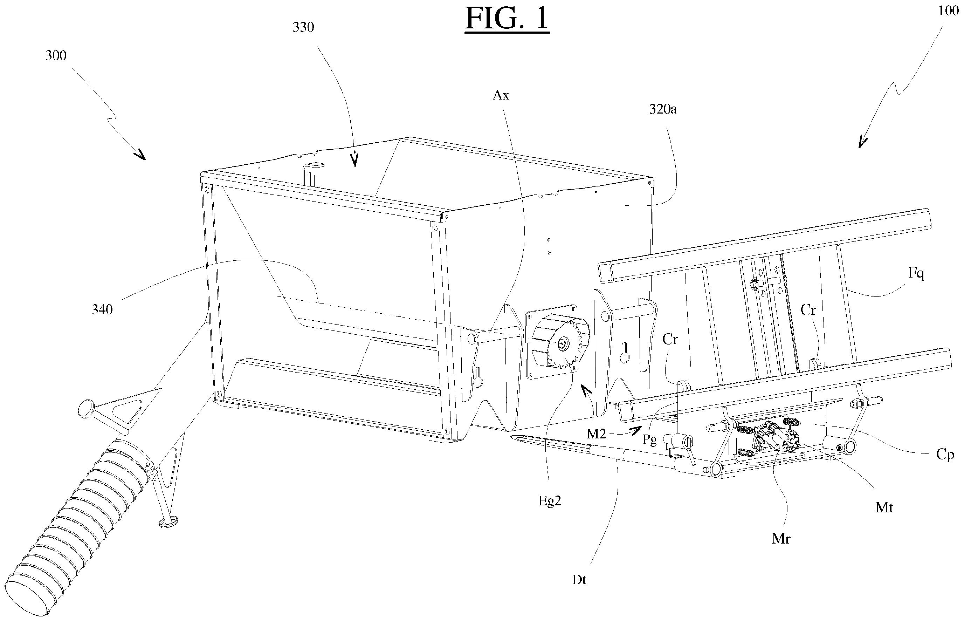

Le porte-outil 100, présenté sur la Fig. 1, est destiné à être attelé à un engin pour soulever du sol et faire fonctionner un accessoire et précisément une trémie 300 sur cette Fig. 1. Il est présenté dans sa position normale d'utilisation. L'engin est par exemple pourvu d'un bras de levage à l'extrémité duquel il convient de fixer le porte-outil, un tracteur dont le système de relevage hydraulique à trois points sert à fixer ledit porte-outil.

La trémie 300 est un contenant destiné à être chargé de matière, par exemple au moins un complément alimentaire et qu'il convient de soulever, de_déplacer puis de vidanger de sorte à déverser son contenu dans des mangeoires pour animaux. La trémie 300 se différencie d'un godet, en ce sens que le godet peut de lui-même charger une matière grâce à une paroi frontale coupante, par exemple, en le basculant pour charger la matière dans un silo, alors que la trémie est remplie par le dessus en demeurant immobile.

La trémie 300 est attelée sur le porte-outil 100 préalablement attelé sur l'engin porteur, puis soulevée et_déplacée par l'engin porteur sur un lieu de chargement dudit complément alimentaire pour être chargée en matière. Elle est ensuite transportée sur le lieu où sont installées les mangeoires, et son contenu est déversé dans celles-ci.

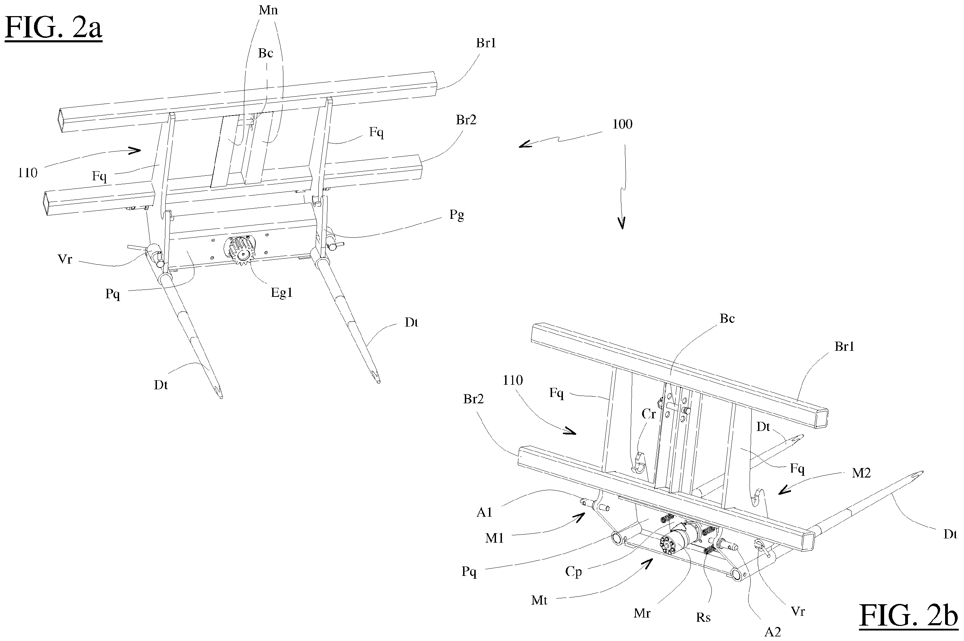

Sur les Figs. 2a et 2b, le porte-outil 100 comprend un châssis 110 supportant au moins un doigt Dt destiné à soulever la trémie 300 et/ou la positionner par rapport au porte-outil 100. Ce porte-outil convient également pour faire fonctionner un autre accessoire, notamment une dérouleuse, une dérouleuse pailleuse. Ledit doigt sert alors à piquer une botte pour pouvoir la soulever et la transporter dans la dérouleuse, la dérouleuse pailleuse et le châssis portent au moins une barre Br pare-botte horizontale formant, notamment, une butée pour celle-ci. Le châssis est encore pourvu d'au moins un moyen d'attelage M1 avec l'engin porteur, un moyen d'accouplement M2 avec la trémie, et un moyen d'entraînement Mt capable de faire fonctionner au moins un organe de la trémie susceptible d'être accouplée avec le porte-outil 100.

Le châssis 110 comprend deux flasques Fq verticaux et parallèles entre eux et qui sont réunis par les deux barres Br1 et Br2 qui s'étendent vers l'extérieur, ainsi que par l'intermédiaire d'une plaque Pq, par exemple fabriquée dans une feuille de tôle et sur laquelle est fixé le moyen d'entraînement Mt. Deux doigts Dt sont également fixés sur les bords inférieurs des deux flasques Fq en s'étendant horizontalement dans une direction quasi perpendiculaire aux deux barres Br. Les doigts Dt sont montés, sur ces Figs. 2, dans deux fourreaux et sont fixés par des goupilles de manière à permettre leur remplacement. La plaque de tôle Pq est formée de plusieurs plis pour renforcer la structure du châssis 110. Elle comprend ainsi un pli inférieur formant retour et qui relie les deux fourreaux. Deux tasseaux sont fixés sous ce pli inférieur et servent d'assise au porte-outil pour qu'il puisse reposer sur le sol.

Au moins un montant Mn relie verticalement les deux barres Br entre les deux flasques Fq. Deux montants Mn, présentant une géométrie en équerre, sont interposés sur ces Figs. 2 entre les deux barres Br. Le moyen d'attelage M1 avec l'engin est destiné à solidariser le porte-outil 100 sur le relevage trois points de l'engin porteur. Il comprend deux axes A1 et A2 traversant respectivement les deux flasques Fq et une série de trous traversant les deux montants Mn et dont une paire est utilisée pour réceptionner une broche Bc de fixation d'un vérin mécanique au troisième point de relevage. Un second moyen d'attelage peut être implanté sur le châssis 110, pour atteler le porte-outil 100, par exemple sur l'extrémité du bras manipulateur d'un engin de levage, communément appelé « télescopique ». Les barres Br sont à cet effet utilisées pour fixer ce second moyen d'attelage sur l'engin porteur. Ce moyen d'attelage, démontable, est installé en option, à la demande de l'acheteur. Il se compose, à cet effet, de ferrures qui peuvent être bridées sur les deux barres Br.

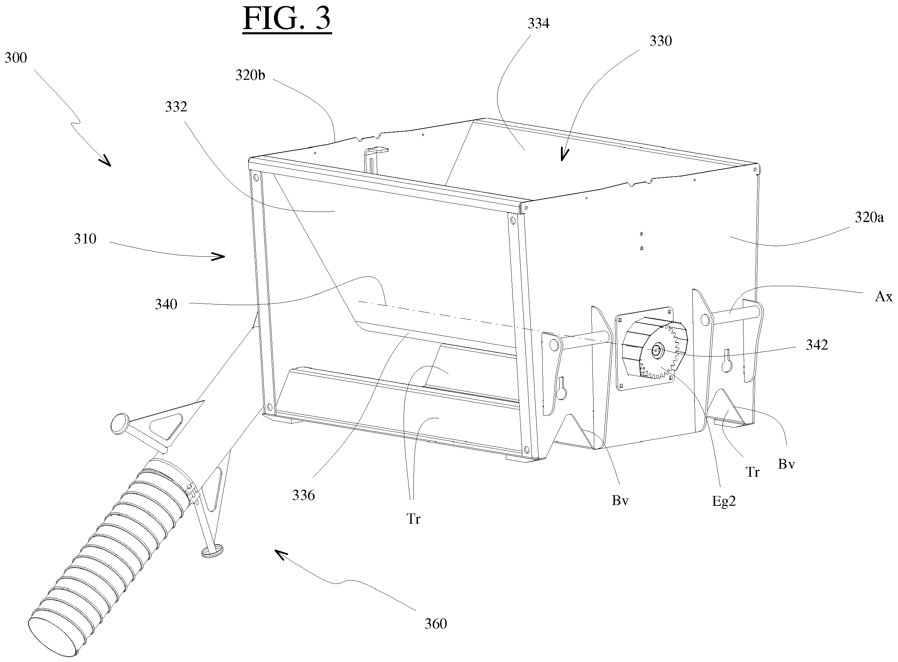

Sur la Fig. 3, la trémie 300 comprend un châssis 310 contenant une benne de chargement 330 de la matière, un organe de vidange de ladite benne et un moyen d'entraînement Eg2 dudit organe de vidange, constitutif d'une partie complémentaire du moyen d'accouplement M2, d'une goulotte 360 de distribution de la matière vidangée.

Le châssis 310 comprend deux parois latérales 320a et 320b réunies en partie basse par deux traverses Tr qui débouchent au travers de deux embrèvements Bv creusant le bord inférieur des deux parois latérales 320. Ces deux traverses Tr servent à réceptionner respectivement les deux doigts du porte-outil afin que la trémie puisse être soulevée par celui-ci. Les deux traverses Tr ou pour le moins les deux embrèvements Bv présentent en section une géométrie en V retourné permettant ainsi de positionner la trémie 300 sur les doigts du porte-outil pendant son levage, les doigts, de préférence de section ronde, ayant préalablement été enfilés dans leurs traverses respectives. Deux tubes peuvent encore être utilisés en remplacement des deux traverses pour réceptionner les doigts et permettre le positionnement de la trémie par rapport au porte-outil. Le positionnement est relatif, c'est-à-dire que c'est la trémie qui se déplace latéralement pendant le levage du porte-outil et/ou c'est le porte-outil qui se déplace latéralement pendant son levage.

La benne de chargement 330 est formée de deux parois 332 et 334 présentant en section une géométrie en V et qui sont réunies par une paroi de fond arrondie 336. Les deux bords latéraux de ces parois sont respectivement fixés, par exemple par un cordon de soudure, sur les faces internes des deux parois latérales 320a et 320b, délimitant ainsi le volume de la benne 330.

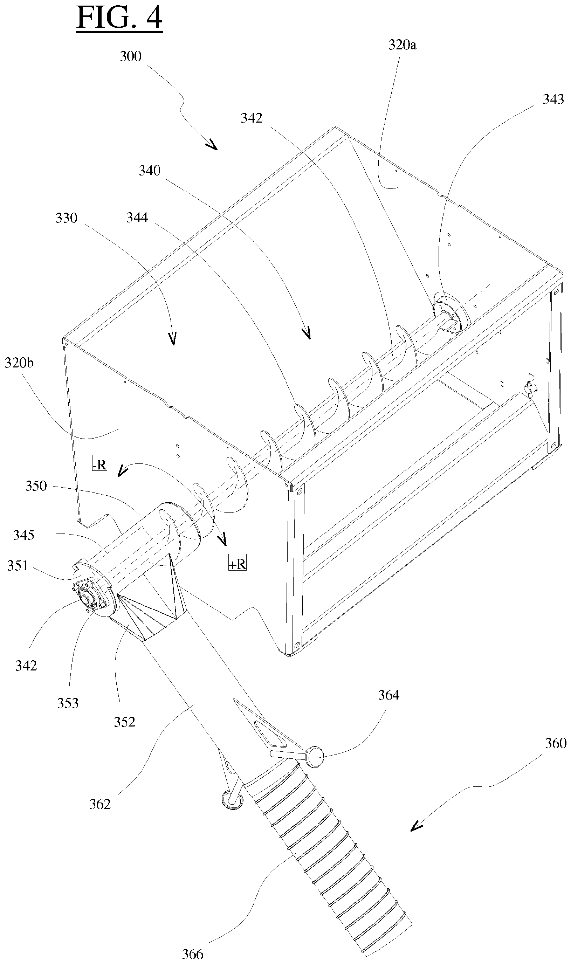

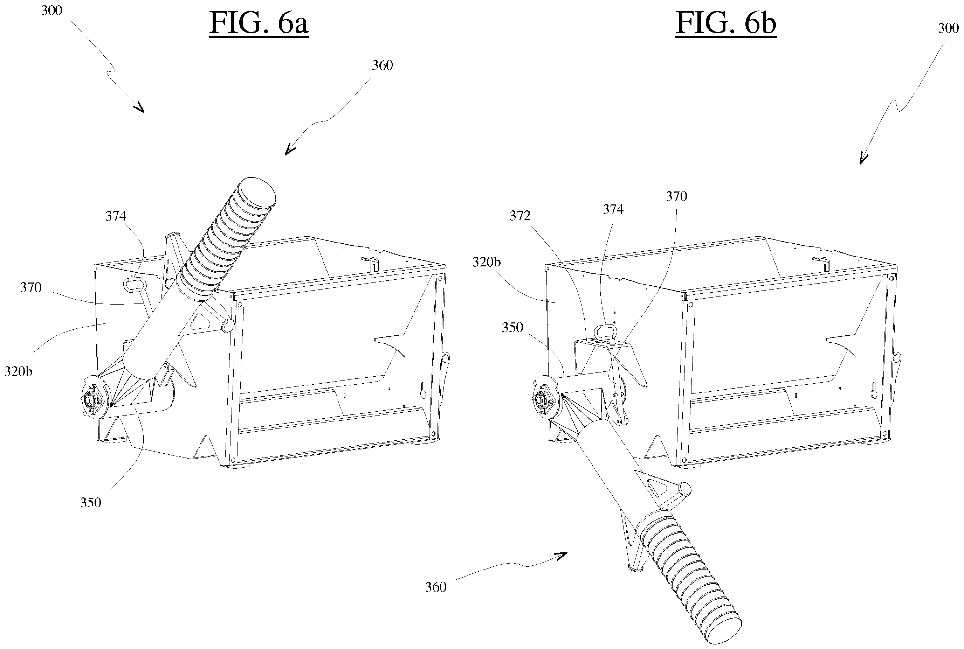

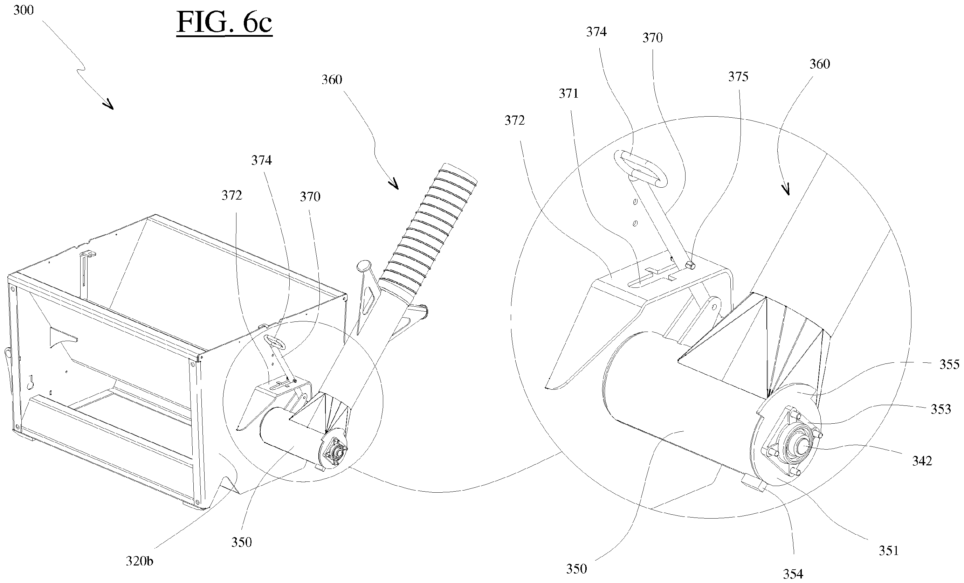

Sur la Fig. 4, l'organe de vidange porte la référence 340. Il est destiné à extraire de la matière susceptible d'être contenue dans la benne pour la transporter en dehors de la trémie 300 et de manière plus précise, dans la goulotte 360 de distribution. L'organe de vidange est constitué d'une vis sans fin 340 disposée contre la paroi de fond de la benne 330. La vis sans fin 340 comprend un tube 342 plein ou creux formant un axe de rotation et autour duquel est disposé un filet hélicoïdal 344. Une première extrémité du tube 342 est montée et tenue dans un palier 343 de guidage à rotation. Ce palier 343 est fixé dans un passage traversant la paroi latérale 320a. La première extrémité du tube 342 se prolonge en deçà du palier. Sur la Fig. 3, l'engrenage Eg2 est fixé sur cette première extrémité du tube 342 de sorte à permettre l'entraînement à rotation, dans un sens ou dans l'autre, de la vis sans fin 340. Sur la Fig. 4, la vis sans fin 340 traverse, du côté opposé à la première extrémité du tube 342, une ouverture pratiquée dans la paroi latérale 320b. Un manchon rotatif 350 raccordé à la goulotte 360 est monté sur la face externe de cette paroi latérale 320b, au droit de l'ouverture pratiquée dans ladite paroi latérale. De manière plus précise, le manchon 350 est constitué d'une pièce de révolution. Il est monté à rotation autour d'un cylindre ajouré, non visible, solidaire de la paroi latérale 320b. Ce cylindre ajouré est fermé à son extrémité libre par un flasque 351 pourvu d'un palier 353 dans lequel la seconde extrémité du tube 342 de la vis sans fin 340 est tenue en étant guidée à rotation. Le filet hélicoïdal 344 pénètre à l'intérieur du cylindre jusqu'au niveau d'une coiffe de raccordement 352 avec la goulotte 360. Une palette 345 succède au filet hélicoïdal 344, à l'intérieur du manchon 350, pour projeter par centrifugation dans la goulotte 360 la matière acheminée par la vis sans fin 340 pendant sa rotation. La palette 345 est constituée d'une plaque plane fixée radialement sur le tube 342. La coiffe 352 raccorde radialement le manchon 350 avec la goulotte 360. Celle-ci se compose préférentiellement de deux sections tubulaires, une première section rigide 362 raccordée à la coiffe 352, prolongée par une section souple 366 fabriquée dans une matière pratiquement incassable composée, par exemple, d'une gaine. Le manchon rotatif 350 peut être orienté suivant les directions référencées par les flèches +R et -R entre une pluralité de positions et notamment entre deux positions de vidange et entre deux positions de transport ou de stockage de la trémie. Dans ses deux positions de vidange, dont l'une est visible sur la Fig. 6b, la goulotte 360 est tournée vers le bas et de manière oblique, soit vers la gauche, soit vers la droite de la trémie 300 vue du côté de sa paroi latérale 320b, c'est-à-dire du côté gauche ou du côté droit du sens d'avancement de l'engin porteur. Dans sa position de transport, dont l'une est visible sur les Figs. 6a et 6c, la goulotte est tournée vers le haut permettant le stockage au sol de la trémie 300 tout en évitant la perte de matière résiduelle susceptible d'être contenue dans ladite goulotte. A ce propos, il est encore possible d'éviter, en référence à la Fig. 4, que de la matière ne ressorte de la goulotte 360, même quand elle est orientée vers le bas, en commandant le fonctionnement de la vis sans fin 340 un court instant dans son sens inverse à celui de son sens de vidange de sorte que la partie terminale du filet hélicoïdal 344 fasse obstruction à la sortie de la matière dans le manchon rotatif 350. Des poignées 364 sont fixées autour de la section rigide 362 pour orienter la goulotte 360.

Ainsi, lorsque la goulotte 360 est tournée vers le bas, la matière stockée dans la trémie est évacuée par en dessous et par devant la trémie, pendant le fonctionnement de la vis sans fin 340 dans son sens de vidange, par exemple dans une mangeoire.

Sur les Figs. 6, la goulotte 370 est pourvue d'un moyen de manoeuvre conçu pour modifier son orientation. Le moyen de manoeuvre est constitué sur les Figs. 6, outre les poignées 364, d'un levier 370 de manoeuvre et de blocage en position de la goulotte 360 et qui est monté de manière articulée par une première extrémité sur une chape solidaire du manchon 350. Sa seconde extrémité est enfilée au travers d'une rainure 371 pratiquée dans une plaque 372 fixée perpendiculairement sur la paroi latérale 320b, au-dessus du manchon 350. Cette seconde extrémité est solidaire d'une poignée 374. Une goupille de retenue 375 traverse le levier 370 pour prendre appui sur la plaque 372 pour définir l'une ou l'autre des deux positions hautes de transport. En manoeuvrant la poignée 374, il est possible de faire passer cette goupille de retenue 375 au travers d'une partie élargie de la rainure 371, traversant celle-ci en son milieu. Le levier 370 peut alors coulisser vers le bas autorisant la goulotte à pivoter vers le bas en direction d'une position de vidange. Sur la Fig. 6c, une butée 354 est présente sur la paroi cylindrique du manchon 350 pour venir en butée sur l'un ou l'autre de deux flancs d'un secteur angulaire 355 qui s'étend localement à la périphérie du flasque 351. Cette butée 354 définit de la sorte les deux positions gauche et droite de vidange de la goulotte 360.

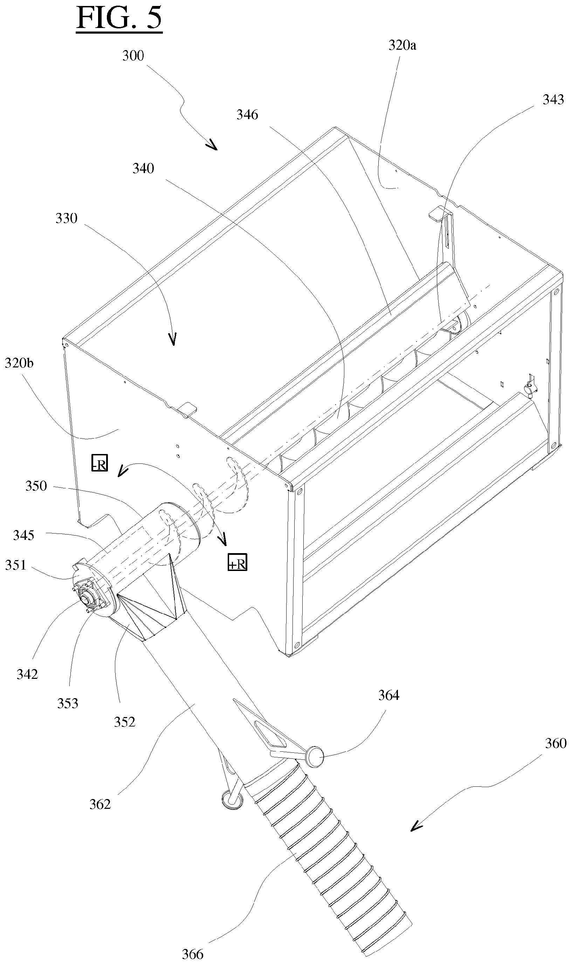

Sur la Fig. 5, une plaque de dévoiement 346 en forme de toit surplombe la vis sans fin 340, pour faciliter son démarrage.

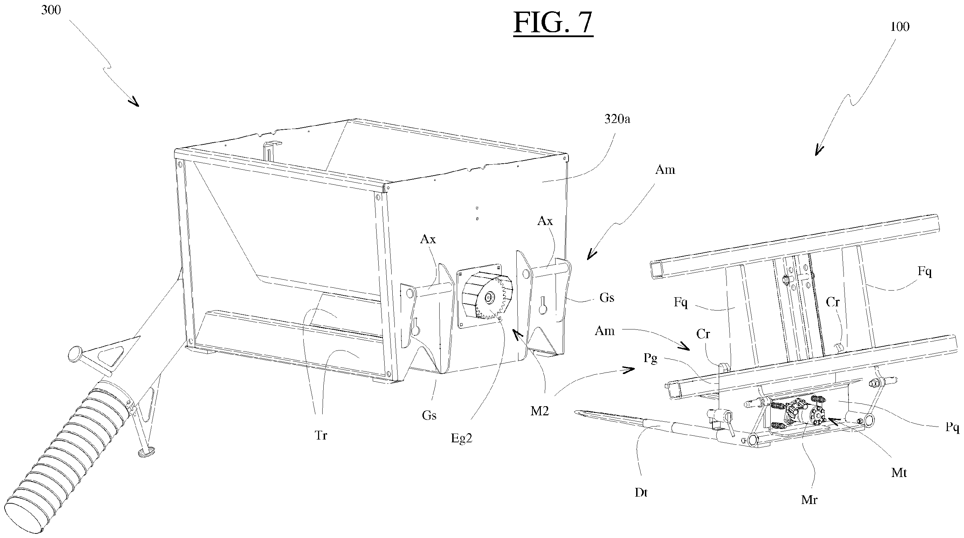

Sur la Fig. 7, le moyen d'accouplement M2 se compose d'un attelage mécanique Am capable de fixer la trémie 300 sur le porte-outil 100 pour qu'elle puisse être portée et déplacée par celui-ci et d'une structure particulière du moyen d'entraînement Mt du porte-outil 100 vis-à-vis de la trémie 300, et qui peut être activé pendant l'attelage de la trémie de sorte que le porte-outil 100 est en mesure de faire fonctionner dans un sens ou dans l'autre, l'organe de vidange de la trémie 300, à l'issue de son accouplement.

L'attelage mécanique Am comprend une paire de crochets Cr fixés sur les flasques Fq du porte-outil 100 et qui peuvent respectivement soulever deux axes Ax solidaires de la paroi latérale 320b de la trémie 300. Les axes Ax sont déportés de la paroi latérale 320b par l'intermédiaire de goussets Gs, pour permettre leur accrochage par les crochets. Les traverses Tr susceptibles d'être portées par les doigts Gt font aussi partie de l'attelage mécanique. Cependant, les doigts Dt servent, dans l'invention et en première fonction, à positionner la trémie en vis-à-vis du porte-outil et le cas échéant à porter celle-ci en complément ou non des crochets Cr. Par positionnement en vis-à-vis il faut comprendre un positionnement relatif en hauteur et latéralement de la trémie 300 par rapport au porte-outil 100.

Ces composants, axes Ax, traverses Tr, forment au moins partiellement la partie de l'attelage mécanique Am porté par la trémie 300 pour coopérer avec la partie de l'attelage mécanique correspondant porté par le porte-outil 100.

On remarquera que les crochets et les axes pourraient être inversés, c'est-à-dire que les deux axes solidaires du porte-outil sont retenus pendant son soulèvement dans les deux crochets solidaires de la trémie.

Le moyen d'entraînement Mt comprend, sur les Figs. 2, un moteur Mr et avantageusement un moteur hydraulique susceptible d'être alimenté, par l'intermédiaire de flexibles de raccordement, par une pompe hydraulique dont est pourvu l'engin porteur du porte-outil 100. Le moteur Mr est fixé d'un côté de la plaque Pq. Le moyen d'entraînement Mt comprend encore, sur les Figs. 2, un engrenage Eg1 tenu par l'arbre du moteur Mr.

Le second engrenage Eg2, visible sur la Fig. 7, est agencé, comme cela a été décrit précédemment, pour pouvoir entraîner à rotation, l'organe de vidange 340 de la trémie 300.

Les deux engrenages sont du type à axes parallèles pour faciliter leur engrènement mutuel. Les deux engrenages sont du type à denture droite, ce qui ne génère pas de forces avec des composantes axiales sur les arbres porteurs.

Sur les Figs. 2, le premier engrenage Eg1 est tenu par l'arbre du moteur Mr qui traverse la plaque Pq de sorte qu'il est disposé de l'autre côté de la plaque et plus précisément du côté des doigts Dt pour être tourné vers la trémie à accoupler.

De façon plus précise, le moteur Mr est fixé sur une contreplaque Cp assemblée à l'arrière de la plaque Pq et qui est maintenue plaquée contre elle par l'intermédiaire d'un moyen de rappel, tel qu'au moins un ressort Rs. Quatre ressorts disposés aux encoignures de la plaque sont mis en oeuvre sur la Fig. 2b. Les ressorts sont précontraints par des vis de fixation de la contreplaque Cp sur la plaque Pq. Ce montage flottant protège l'arbre du moteur Mr des chocs éventuels appliqués sur l'engrenage Eg1.

Le moteur Mr est fixé sur la plaque Pq de sorte que le premier engrenage Eg1 qu'il porte puisse être positionné en dessous du second engrenage Eg2, quand la trémie 300 est accouplée au porte-outil 100.

Un autre moyen de guidage du porte-outil 100 vis-à-vis de la trémie 300 peut aussi agir, pendant l'attelage, dans une direction de levage du porte-outil et qui est perpendiculaire à celle des axes des deux engrenages ou pour le moins à l'axe du premier engrenage. Il comprend, sur la Fig. 7, la paire de flasques Fq dont les rebords situés sous les crochets Cr constituent une paroi de guidage Pg qui glisse verticalement ou dans une direction quasi verticale, le long de la paroi latérale 320a porteuse du second engrenage Eg2, pendant l'attelage.

Compte tenu que la trémie 300 est suspendue sur le porte-outil 100, il n'est pas indispensable de les verrouiller mutuellement. Cependant, au moins un verrou Vr, visible sur les Figs. 2 peut être utilisé. Il se compose d'un doigt rotatif et escamotable monté à coulissement dans un fourreau solidaire du porte-outil 100 et qui est terminé par un ergot perpendiculaire. Le doigt peut passer au travers d'un logement réalisé dans la paroi latérale porteuse du second engrenage et qui est élargi localement par une fente au travers de laquelle l'ergot peut passer puis ensuite tourner pour réaliser le verrouillage.

Le fonctionnement de la trémie se présente de la manière suivante. Dans un mode préféré d'utilisation, la trémie de l'invention est utilisée conjointement avec une dérouleuse ou une dérouleuse/pailleuse. On attelle le porte-outil 100 sur l'engin de levage, puis le conducteur de l'engin pique une botte de fourrage à l'aide des doigts Dt, la soulève, la déplace et la dépose dans la machine. Celle-ci est ensuite attelée sur le porte-outil 100, puis déplacée vers le lieu où elle doit être déroulée, par exemple une mangeoire. Le conducteur de l'engin actionne la commande qui provoque dans la machine le déroulage de la botte et fait avancer en même temps l'engin de levage. Lorsque le fourrage est épandu, il déplace la machine dans un lieu de stockage, la dételle, puis il attelle ensuite la trémie 300 sur le porte-outil 100 de l'engin porteur. Il engage pour cela les doigts Dt dans les traverses Tr de la trémie 300 en les enfilant au travers des embrèvements Bv, et avance l'engin porteur pour mettre en butée le porte-outil 100 contre la trémie 300. Il commande ensuite le soulèvement du porte-outil 100 provoquant ainsi l'attelage de la trémie et son accouplement sur ledit porte-outil. La trémie 300 est déplacée sous un ou plusieurs conteneurs et une quantité de compléments alimentaires est déversée dans sa benne de chargement 330. La trémie est ensuite déplacée en direction de la mangeoire, puis le conducteur actionne la commande qui provoque la rotation de la vis sans fin 340 dans son sens permettant la vidange de ladite trémie pour déverser les compléments alimentaires par-dessus le fourrage. On notera que dans un mode opératoire différent, on verse dans un premier temps les compléments alimentaires dans la mangeoire puis, dans un second temps, on déroule la botte de fourrage sur celui-ci.

Un autre exemple d'utilisation de la trémie de l'invention consiste à s'en servir pour remplir un semoir avec du blé pour le semer.

Le porte-outil 100 de l'invention permet d'atteler rapidement une trémie 300. Dès lors que la trémie est attelée, elle peut être mise en service grâce à l'engrènement de l'engrenage du porte-outil mis en oeuvre automatiquement avec l'engrenage correspondant de ladite trémie, par simple levage du porte-outil.

D'autres types d'attelages mécaniques peuvent encore être utilisés. L'homme du métier peut ainsi utiliser un crochet pour verrouiller la trémie avec le porte-outil. Le conducteur avance l'engin porteur de sorte à introduire les doigts dans les traverses de la trémie jusqu'à appliquer ledit porte-outil contre ladite trémie. Il commande ensuite le soulèvement de la trémie du sol, puis la verrouille à l'aide du crochet.

Ainsi et dans une première variante de réalisation, non représentée, l'engrenage Eg2 est remplacé par un crabot capable de s'engager mécaniquement avec un crabot correspondant présent sur le porte-outil et qui remplace l'engrenage Eg1 décrit ci-avant. Le crabot est formé d'une pièce de révolution portant des éléments d'engagement mécanique tels que des empreintes, des doigts. Les deux crabots s'engagent mutuellement par approche frontale en étant disposés face à face.

L'accouplement de la trémie s'effectue alors par approche horizontale du porte-outil en direction de ladite trémie. L'attelage mécanique de la trémie peut comporter les deux traverses Tr soulevées par les doigts du porte-outil. Un verrou peut être utilisé pour bloquer la trémie sur le porte-outil.

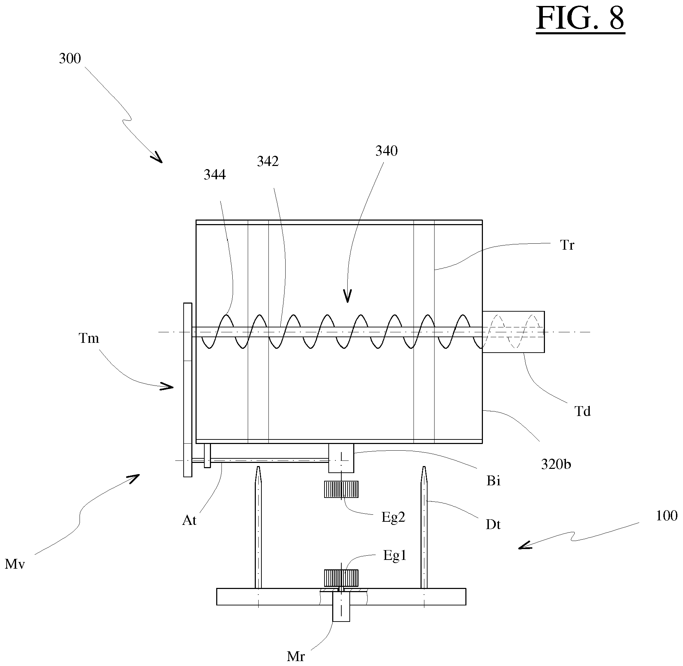

Dans une seconde variante de réalisation présentée sur la Fig. 8, l'engrenage Eg2 ou le crabot est disposé à un autre emplacement sur la trémie 300. Sur cette Fig. 8, l'engrenage Eg2 est implanté le long d'un côté qui est parallèle à l'axe de la vis sans fin 340. L'axe de l'engrenage Eg2 est perpendiculaire à celui de la vis sans fin 340. Un mécanisme de renvoi Mv est interposé entre l'axe de la vis sans fin 340 et ledit pignon Eg1. Il comprend une transmission Tm par chaîne/pignons ou par courroie/poulies, un arbre de transmission At vers un boîtier Bi de renvoi d'angle à 90° et sur lequel est monté le pignon Eg1. L'arbre de transmission At porte à une extrémité l'un des pignons ou l'une des poulies et son autre extrémité est montée dans le boîtier Bi. L'arbre de transmission At est guidé à rotation par au moins un palier fixé sur le châssis de la trémie 300.

L'accouplement de la trémie 300 est réalisé par approche du porte-outil 100 vers la trémie 300. L'attelage mécanique est adapté en conséquence selon que l'approche est horizontale ou verticale. Deux traverses Tr peuvent être disposées sous le châssis de la trémie dans le sens d'enfilement des doigts Gt du porte-outil 100. Deux axes peuvent encore être fixés sur le châssis de la trémie, sur le côté de la machine où est présent l'engrenage Eg2, le crabot. On remarquera que la goulotte est remplacée par un tube de déport Td prolongeant la sortie de la vis sans fin 340 à l'extérieur de la paroi latérale 320b permettant de dévoyer la chute de la matière au-delà du passage des roues de l'engin porteur. Une longueur accrue de la trémie pourrait cependant convenir pour dispenser la trémie de ce tube de déport. Une ouverture de déchargement de la trémie pourrait encore être réalisée dans la paroi de fond de la benne, c'est-à-dire par dessous ladite trémie.

Les compléments alimentaires sont des matières sèches qui sont en principe stockées dans des conteneurs fermés. Ces compléments alimentaires peuvent encore être stockés en tas, et précisément dans un silo. En dotant la benne de la trémie d'un bord longitudinal tranchant, il est possible à l'engin de levage de faire basculer la trémie pour la charger directement dans le tas. Le châssis de la trémie est également adapté au profil de la benne pour réaliser cette opération.

Pour distribuer d'un côté ou de l'autre de l'engin porteur, la trémie 300 peut être équipée d'un second mécanisme de renvoi et d'un second engrenage ou crabot présent de l'autre côté de la trémie, c'est-à-dire du côté opposé où est présent l'engrenage Eg2.

Dans une troisième variante de réalisation, non représentée, la vis sans fin présente une construction particulière, comprenant un arbre équipé de deux hélicoïdes coaxiaux, l'un intérieur et l'autre extérieur, pourvus de pas inverses. L'hélicoïde intérieur sert à brasser la matière alors que l'hélicoïde extérieur sert à vidanger la matière au travers de la goulotte ou de l'une de ses parois latérales.

Dans une quatrième variante de réalisation, non représentée, la vis sans fin est entraînée à rotation par l'intermédiaire d'un moyen d'entraînement constitué d'un moteur, tel qu'un moteur hydraulique et de son branchement. Le moteur hydraulique est monté de préférence à une extrémité de l'axe d'entraînement de la vis sans fin. Le moteur est raccordé à deux coupleurs fixés sur une platine de raccordement attenante au châssis de la trémie. Le porte-outil porte une autre platine pourvue de coupleurs raccordés au circuit hydraulique de l'engin porteur. Les deux platines sont pourvues de moyens de raccordement permettant de raccorder les coupleurs de la trémie avec ceux du porte-outil par simple rapprochement mutuel. Le rapprochement mutuel est mis en oeuvre préférentiellement par le soulèvement du porte-outil. Les coupleurs de la platine de la trémie sont alors disposés avec leurs axes orientés verticalement.

Dans ces conditions, l'approche du porte-outil en direction de la trémie permet à l'issue de l'accouplement des deux platines de faire fonctionner le moteur hydraulique d'entraînement de la vis sans fin. L'attelage mécanique de la trémie peut comprendre deux traverses, deux axes.

Dans une cinquième variante de réalisation, non représentée, l'organe de vidange est constitué d'un tapis roulant disposé dans le fond de la benne de la trémie. Il peut être entraîné à rotation par l'intermédiaire d'un moyen d'entraînement constitué d'engrenage, d'un crabot, d'un moteur.

Le porte-outil de l'invention peut encore n'être pourvu que d'un seul doigt. Ce doigt sert à positionner la trémie en vis-à-vis du porte-outil et le cas échéant à porter celle-ci en complément d'un moyen de retenue à rotation de ladite trémie, constitué, par exemple, d'une paire de crochets coopérant respectivement avec une paire d'axes portés par la trémie. Ces éléments constituent aussi un moyen d'attelage.

## Revendications

1. Trémie (300) et son porte-outil (100) destiné à être attelé à un engin porteur pour charger une matière et la distribuer, la trémie comprenant une benne (330), un organe de vidange (340) de ladite benne, un moyen d'attelage avec ledit porte-outil, ledit porte-outil comprenant un moyen d'attelage correspondant avec la trémie, ledit porte-outil comprenant au moins un doigt (Dt), les moyens d'attelage comprenant un moyen conçu pour soulever du sol ladite trémie à l'aide de l'engin porteur, l'organe de vidange (340) de ladite trémie étant relié à un moyen d'entraînement à rotation destiné à être accouplé avec un organe correspondant présent sur le porte-outil, l'accouplement entre ces deux organes étant réalisé à l'issue de l'attelage mécanique de la trémie (300) sur ledit porte-outil, **caractérisés en ce que** le moyen conçu pour soulever du sol ladite trémie comprend ledit doigt dont est pourvu le porte-outil (100) et qui peut s'engager dans une traverse (Tr) correspondante disposée dans la partie basse de la trémie (300), considérée dans sa position de service.

2. Trémie (300) et son porte-outil (100) selon la revendication 1, **caractérisés en ce que** le moyen d'entraînement à rotation comprend un engrenage (Eg2) ou un crabot, destiné à coopérer avec un engrenage ou un crabot correspondant porté par le porte-outil (100).

3. Trémie (300) et son porte-outil (100) selon la revendication 1, **caractérisés en ce que** le moyen d'entraînement à rotation comprend un moteur hydraulique raccordé à des coupleurs montés sur une platine susceptible de coopérer avec une platine correspondante portée par le porte-outil (100).

4. Trémie (300) et son porte-outil (100) selon l'une quelconque des revendications 1 à 3, **caractérisés en ce qu'**elle comprend une paroi latérale (320a) traversée par une ouverture et **en ce que** l'organe de vidange (340) comprend un tube (342) formant un axe de rotation pour ledit organe de vidange, au moins un filet hélicoïdal (344) étant disposé autour dudit tube de sorte à évacuer la matière susceptible d'être contenue dans ladite trémie au travers de ladite ouverture.

5. Trémie (300) et son porte-outil (100) selon la revendication 4, **caractérisés en ce qu'**un mécanisme de renvoi (Mv) est interposé entre l'axe de rotation et ledit pignon (Eg1) ou ledit crabot, le mécanisme de renvoi (Mv) comprenant une transmission (Tm) par chaîne/pignons ou par courroie/poulies, un arbre de transmission (At) vers un boîtier (Bi) de renvoi d'angle à 90° et sur lequel est monté ledit pignon ou ledit crabot.

6. Trémie (300) et son porte-outil (100) selon l'une quelconque des revendications 4 ou 5, **caractérisés en ce qu'**une goulotte (360) de vidange est raccordée à l'extérieur d'une autre paroi latérale (320b) constitutive de ladite trémie.

7. Trémie (300) et son porte-outil (100) selon la revendication 6, **caractérisés en ce que** la goulotte (360) est raccordée à ladite paroi latérale par l'intermédiaire d'un manchon rotatif (350) pour dévoyer d'un bord ou de l'autre de la trémie la matière évacuée par son organe de vidange (340).

8. Trémie (300) et son porte-outil (100) selon la revendication 7, **caractérisés en ce que** la goulotte (360) est pourvue d'un moyen de manoeuvre (370) destiné à l'orienter.

## Patentansprüche

1. Trichter (300) und sein Halter (100), der dazu bestimmt ist, an eine Tragmaschine angehängt zu werden, um Material zu laden und zu verteilen, wobei der Trichter einen Kipper (330), ein Entleerungselement (340) des Kippers, ein Anhängeelement mit dem Halter umfasst, wobei der Halter ein entsprechendes Anhängeelement mit dem Trichter umfasst, wobei der Halter mindestens einen Finger (Dt) umfasst, wobei die Anhängeelemente ein Mittel umfassen, das dazu vorgesehen ist, den Trichter mit Hilfe der Tragmaschine vom Boden hochzuheben, wobei das Entleerungselement (340) des Trichters mit einem Drehantriebsmittel verbunden ist, das dazu bestimmt ist, mit einem entsprechenden auf dem Halter vorhandenen Element gekoppelt zu werden, wobei die Kopplung zwischen diesen zwei Elementen nach dem mechanischen Anhängen des Trichters (300) an dem Halter erfolgt, **dadurch gekennzeichnet, dass** das Mittel, das dazu vorgesehen ist, den Trichter vom Boden hochzuheben, den Finger umfasst, mit dem der Halter (100) versehen ist, und der in eine entsprechende Querstrebe (Tr) eingreifen kann, die in dem unteren Teil des Trichters (300), in seiner Betriebsposition betrachtet, angeordnet ist.

2. Trichter (300) und sein Halter (100) nach Anspruch 1, **dadurch gekennzeichnet, dass** das Drehantriebsmittel eine Verzahnung (Eg2) oder eine Klaue umfasst, die dazu bestimmt ist, mit einer entsprechenden Verzahnung oder Klaue, die vom Halter (100) getragen wird, zusammenzuwirken.

3. Trichter (300) und sein Halter (100) nach Anspruch 1, **dadurch gekennzeichnet, dass** das Drehantriebsmittel einen Hydraulikmotor umfasst, der an Koppler angeschlossen ist, die auf einer Platine montiert sind, die geeignet ist, mit einer entsprechenden Platine zusammenzuwirken, die vom Halter (100) getragen wird.

4. Trichter (300) und sein Halter (100) nach einem der Ansprüche 1 bis 3, **dadurch gekennzeichnet, dass** er eine Seitenwand (320a) umfasst, die von einer Öffnung durchquert wird, und dass das Entleerungselement (340) ein Rohr (342) umfasst, das eine Drehachse für das Entleerungselement bildet, wobei mindestens ein Steigungswendel (344) um das Rohr angeordnet ist, um das Material, das im Trichter enthalten sein kann, durch die Öffnung zu beseitigen.

5. Trichter (300) und sein Halter (100) nach Anspruch 4, **dadurch gekennzeichnet, dass** ein Umlenkmechanismus (Mv) zwischen der Drehachse und dem Ritzel (Eg1) oder der Klaue vorgesehen ist, wobei der Umlenkmechanismus (Mv) eine Übertragung (Tm) durch Kette/Ritzel oder Riemen/Rollen, eine Übertragungswelle (At) zu einem Umlenkgehäuse (Bi) um einen Winkel von 90°, auf der das Ritzel oder die Klaue montiert ist, umfasst.

6. Trichter (300) und sein Halter (100) nach einem der Ansprüche 4 oder 5, **dadurch gekennzeichnet, dass** eine Entleerungsrinne (360) außerhalb einer weiteren den Trichter bildenden Seitenwand (320b) angeschlossen ist.

7. Trichter (300) und sein Halter (100) nach Anspruch 6, **dadurch gekennzeichnet, dass** die Rinne (360) an die Seitenwand mit Hilfe einer drehbaren Manschette (350) angeschlossen ist, um das durch sein Entleerungselement (340) beseitigte Material von einem oder dem anderen Rand des Trichters umzuleiten.

8. Trichter (300) und sein Halter (100) nach Anspruch 7, **dadurch gekennzeichnet, dass** die Rinne (360) mit einem Betätigungsmittel (370) versehen ist, das dazu bestimmt ist, sie auszurichten.

## Claims

1. Hopper (300) and the holder (100) thereof designed to be hitched to a carrier machine for charging a material and distributing the latter, the hopper comprising a bin (330), a member (340) for emptying said bin, a means for hitching with said holder, said holder comprising a corresponding means for hitching to the hopper, said holder comprising at least one finger (Dt), the hitching means comprising a means to raise said hopper from the ground with the aid of the carrier machine, the member (340) for emptying said hopper being connected to a rotational drive means designed to be coupled to a corresponding member present on the holder, these two members being coupled at the end of the mechanical device for hitching the hopper (300) on said holder, which are **characterized in that** the means designed for raising said hopper from the ground comprises said finger with which the holder (100) is provided and which is able to engage in a corresponding cross member (Tr) arranged in the low part of the hopper (300) when viewed in the service position thereof.

2. Hopper (300) and the holder (100) thereof according to Claim 1, **characterized in that** the rotational drive means comprises a gear (Eg2) or a direct-drive dog clutch, designed to interact with a corresponding gear or direct-drive dog clutch carried by the holder (100).

3. Hopper (300) and the holder (100) thereof according to Claim 1, **characterized in that** the rotational drive means comprises a hydraulic motor connected to couplers mounted on a plate capable of interacting with a corresponding plate carried by the holder (100).

4. Hopper (300) and the holder (100) thereof according to any one of Claims 1 to 3, **characterized in that** it comprises a lateral wall (320a) traversed by an opening and **in that** the emptying member (340) comprises a tube (342) forming a rotation shaft for said emptying member, at least one helical thread (344) being arranged around said tube such as to evacuate the material capable of being contained in said hopper via said opening.

5. Hopper (300) and the holder (100) thereof according to Claim 4, **characterized in that** a return mechanism (Mv) is interposed between the rotation shaft and said cog (Eg1) or said direct-drive dog clutch, the return mechanism (Mv) comprising a chain/cog or belt/pulley transmission (Tm), a transmission shaft (At) to a 90° angular gearbox (Bi) on which said cog or said direct-drive dog clutch is mounted.

6. Hopper (300) and the holder (100) thereof according to any one of Claims 4 and 5, **characterized in that** an emptying chute (360) is connected to the exterior of another lateral wall (320b) constituting said hopper.

7. Hopper (300) and the holder (100) thereof according to Claim 6, **characterized in that** the chute (360) is connected to said lateral wall by means of a rotary sleeve (350) for diverting, from one side or the other of the hopper, the material evacuated by the emptying member (340) thereof.

8. Hopper (300) and the holder (100) thereof according to Claim 7, **characterized in that** the chute (360) is provided with a manoeuvring means (370) designed for the orientation thereof.
